Europäisches Patentamt

European Patent Office

Office européen des brevets

(19)

(11) Veröffentlichungsnummer: **0 115 014**
**B1**

(12) **EUROPÄISCHE PATENTSCHRIFT**

(45) Veröffentlichungstag der Patentschrift:
20.04.88

(21) Anmeldenummer: **83112759.2**

(22) Anmeldetag: **19.12.83**

(51) Int. Cl.⁴: **F 24 F 5/00,** F 24 D 11/02,
**F 25 B 29/00**

(54) **Verfahren zur Energieeinsparung bei der Regelung der Lufttemperatur in Gebäuden und Gebäude hierzu.**

(30) Priorität: **30.12.82 DE 3248582
21.02.83 DE 3305957
07.10.83 DE 3336495**

(43) Veröffentlichungstag der Anmeldung:
**08.08.84 Patentblatt 84/32**

(45) Bekanntmachung des Hinweises auf die Patenterteilung:
**20.04.88 Patentblatt 88/16**

(84) Benannte Vertragsstaaten:
**AT BE CH DE FR GB IT LI LU NL SE**

(56) Entgegenhaltungen:
**EP - A - 0 002 839
EP - A - 0 027 147
DE - A - 2 750 918
DE - A - 2 929 004
DE - A - 2 942 392
DE - A - 2 952 758
DE - A - 3 112 677**

(73) Patentinhaber: **Schmitz, Johannes, Dr.-Ing.,
Nordstrasse 2, D-5162 Niederzier (DE)**

(72) Erfinder: **Schmitz, Johannes, Dr.-Ing., Nordstrasse 2,
D-5162 Niederzier (DE)**

(74) Vertreter: **Liermann, Manfred,
Josef-Schregel-Strasse 19, D-5160 Düren (DE)**

## Beschreibung

Die Erfindung betrifft ein Verfahren zur Energieeinsparung bei der Regelung der Lufttemperatur in Gebäuden und ein Gebäude zur Durchführung des Verfahrens.

Ein Verfahren der oben beschriebenen Art, sowie das hierzu gehörige Gebäude sind bereits bekannt geworden durch die DE-A-3 112 677. Die dort vorgeschlagenen Massnahmen haben sich durchaus bewährt und eine erhebliche Energieeinsparung gebracht. Es hat sich jedoch gezeigt, dass die Regelung des Wärmezustandes der Luft des Gebäudes noch nicht allen Anforderungen gerecht wird.

Weiterhin ist ein Verfahren der o.gen. Art und eine dazugehörige Anlage bekannt geworden mit der DE-A-2 929 004. In dieser Schrift ist ein Gebäude beschrieben, dessen Aussenwände mindestens teilweise über entsprechende Luftführungskanäle von Luft umströmt werden. Diese Luft wird über einen zentralen Sammelschacht vollständig einer Wärmepumpe zugeführt und dort erwärmt. Die erwärmte Luft wird dann wieder zurück in den Kreislauf geschickt. Eine solche Einrichtung und die Verfahrensweise dieser Einrichtung ergibt eine weitere Verbesserung in der Energieeinsparung. Eine Regelung der Rauminnentemperatur ist jedoch nur unbefriedigend möglich. So sind z.B. Wärmeüberschüsse in den Räumen überhaupt nicht abbaubar. Es kann eine Zustandsregelung der Wärmesituation im Gebäudeinneren nicht herbeigeführt werden. Es wird lediglich ein Teil der an den Aussenwänden auftretenden Verlustwärme wieder eingefangen und über die Wärmepumpe wieder entzogen und einem Heizkreislauf für die Gebäudeinnenheizung angeboten. Hierdurch ist nicht nur eine Zustandsregelung des Innenzustandes des Gebäudes so gut wie unmöglich. Es muss darüber hinaus auch hingenommen werden, dass je nach Zustand der angebotenen Luft die Wärmepumpe in einem ungünstigen Betriebsbereich arbeitet und damit unnötig Energie verbraucht. Auch dieser unnötige Energieverbrauch bei der Wärmepumpe muss als Verlust betrachtet werden.

Der Erfindung liegt somit die Aufgabe zugrunde, ein Verfahren der oben beschriebenen Art vorzuschlagen, welches durch bessere Zustandsregelung einen grösseren Energiespareffekt bewirkt, und der Erfindung liegt weiterhin die Aufgabe zugrunde, ein hierzu geeignetes Gebäude mit den geeigneten Gebäudekomponenten vorzuschlagen.

Diese Aufgabe ist bei einem Verfahren der oben beschriebenen Art dadurch gelöst, dass die Strömungsmaschine unabhängig ist und die Luft saugseitig von Abluft aus den Gebäuderäumen und Gebäudekanälen ergänzt wird und mindestens in einer für die angestrebte Regelung notwendigen Menge der Wärmepumpe zugeführt wird, wobei die entwärmte Luft wahlweise insgesamt oder in Teilbeträgen in den Kreislauf zurückgeführt und die nicht zurückgeführte Luft nach aussen abgegeben wird, wobei die nach aussen abgegebene Luft infolge des in den Räumen entstehenden leichten Unterdruckes über natürliche Undichtigkeiten des Gebäudes oder/und über Fensterlüftung ersetzt wird. Durch diese Massnahmen wird es möglich mittels der Wärmepumpe, die ja im Parallelbetrieb zu dem Luftstrom, der das Gebäude umströmt, betrieben wird, die Temperatur und damit den Wärmeinhalt dieses genannten Luftstromes zu regeln und gleichzeitig die an die Gebäudeheizungseinrichtungen von der Wärmepumpe abgegebene Wärmemenge zu regeln. Hierdurch kann die Temperatur der als Isolierschicht wirkenden, die Gebäudeteile umströmenden Luft nahezu beliebig verändert werden, so dass durch die Regelung dieser Lufttemperatur die Richtung des Wärmeflusses von aussen nach innen oder von innen nach aussen geregelt werden kann. So kann beispielsweise die das Gebäude umströmende Luft in ihrer Temperatur höher als die Lufttemperatur der Räume des Gebäudes gehalten werden, wodurch ein Abwandern der Gebäudeinnenwärme nach aussen nicht mehr möglich ist. Lediglich aus dem genannten Luftstrom selbst tritt ein Wärmeverlust nach aussen auf.

Da die Geschwindigkeit des Wärmeüberganges im wesentlichen von der Grösse der Temperaturdifferenz abhängt, ist es möglich, beispielsweise einen Wärmeübergang von innen nach aussen dann, wenn die Aussentemperatur sehr viel niedriger ist als die Gebäudeinnentemperatur, zu verlangsamen, wenn man die Temperatur des das Gebäude umströmenden Luftstromes niedriger als die Gebäudeinnentemperatur, aber höher als die Gebäudeaussentemperatur einstellt, wobei diese Einstellung selbstverständlich beispielsweise über Thermofühler auch automatisch erfolgen kann. Ein solcherart in seiner Temperatur eingestellter Luftstrom weist zur Gebäudeinnentemperatur einen kleineren Temperatursprung auf, als der Temperatursprung zwischen Gebäudeinnentemperatur und Aussentemperatur. Infolgedessen verlangsamt sich der Wärmestrom von innen nach aussen, wobei in einem solchen Fall mit «aussen» der das Gebäude einhüllende Luftstrom gemeint ist. Die aus den Gebäudeinnenteilen in diesen Luftstrom abgegebene Wärmemenge wird vom Luftstrom wieder zurückgeführt und über die Wärmepumpe rückgewonnen. Hierdurch wird der Luftstrom etwas aufgewärmt. Da aber das Temperaturgefälle zwischen Luftstrom und Aussentemperatur ebenfalls geringer ist als das Temperaturgefälle zwischen Rauminnentemperatur und Aussentemperatur tritt auch hier nur ein langsamerer Wärmeübergang auf, so dass der Wärmeverlust aus dem das Gebäude einhüllenden Luftstrom an die Umwelt ebenfalls minimiert werden kann. Zusammengefasst kann hierzu gesagt werden, dass in solcher Art der unkontrollierte Energieaustausch mit der Umgebung minimiert und der gewollte Energieaustausch mit technischen Komponenten maximiert wird.

In einer Ausgestaltung der Erfindung ist vorgesehen, dass die im Luftkreislauf umgepumpte Luft durch massereiche Teile des Gebäudes geführt wird. Diese massereichen Teile des Gebäudes wie z.B. das Fundament des Gebäudes, dienen hierbei als Wärmespeicher. Bei Wärmeüberschuss können diese massereichen Teile aufgewärmt werden und es ist sogar möglich, das angrenzende Erdreich des Fundamentes hier mit einzubeziehen. Die Grösse des solcherart zur Verfügung stehenden Wärmespeichers erlaubt in jedem Fall eine Abkühlung der abzukühlenden Luft, auf ein Temperaturniveau unterhalb der Temperatur, die in Gebäuden, in denen sich Menschen aufhalten, normalerweise gewünscht wird. So ist es beispielsweise möglich, das Fundament und gegebenenfalls im nahen Bereich das angrenzende Erdreich auf 12° bis 15 °C aufzuheizen. Tritt nun ein höherer Wärmebedarf in den Räumen des Gebäudes auf, so kann die hier gespeicherte Wärme über die parallel zum Luftkreislauf für die Isolation des Gebäudes geschaltete Wärmepumpe wieder zurückgewonnen werden. Hierdurch werden recht grosse Speicherkapazitäten, deren Anlage keinerlei besondere Kosten verursacht, nutzbar gemacht und es ist möglich, aus dem Luftisolierkreislauf für das Gebäude die in diesen Kreislauf eindringende Umweltwärme z.B. als Sonnenenergie mitzunutzen und in dem kostenlos zur Verfügung stehenden Speicher der beschriebenen Art zu speichern und bei Bedarf wieder zurückzugewinnen.

Eine weitere Ausgestaltung der Erfindung sieht vor, dass die zur Wärmepumpe zugeführte Luft, falls erforderlich, durch Zufuhr von Fremdwärme auf ein für einen optimalen Betrieb der Wärmepumpe günstiges Temperaturniveau gebracht oder dort gehalten wird. Hierdurch kann die Wärmepumpe immer mit einer günstigen Leistungszahl betrieben werden, mit allen dazugehörigen Vorteilen.

Auch ist nach der Erfindung noch vorgesehen, dass der Luftstrom durch Zufuhr von Fremdwärme über den Wärmetauscher auf ein günstiges Temperaturniveau gebracht und/oder dort gehalten wird, um mit der zugeführten Wärme den Wärmebedarf des Gebäudes zu decken. Dies ist eine besonders günstige Betriebsweise.

Weiterhin ist nach der Erfindung hinsichtlich der Anordnung eines Wärmetauschers im Luftkreislauf am Fusse des Zentralschachtes noch vorgesehen, dass der Wärmetauscher bei geringem Heizwärmebedarf der Verbraucher von Heizungswasser durchflossen wird und Kellerfussboden und Kellerwände mit Hilfe der umgewälzten Luft aufgeheizt werden. Diese Aufheizung wird über einen Raumthermostaten im Luftkreislauf und über Thermostate in den Wohnungen geregelt.

Weiterhin ist hinsichtlich des erfindungsgemässen Verfahrens bezüglich der Anordnung einer Parallelheizung im Vorlauf des Wasserkreislaufs noch vorgesehen, dass die Leistung der Parallelheizung die gleiche Grössenordnung hat wie die elektrische Leistung der Wärmepumpe, wobei eine solche Parallelheizung in die Wärmepumpe integriert sein kann. Es ist auch möglich, dass der Wasserkreislauf des Heizungssystems über einen Wärmetauscher mit der Brauchwasserzubereitung verknüpft ist. Die Zuschaltung der Parallelheizung wird über einen Thermostaten im Luftkreislauf geregelt.

Weiterhin ist nach der Erfindung noch vorgeschlagen, dass die Temperatur von mindestens zwei Niedertemperaturwärmespeichern unabhängig voneinander geregelt wird. Hierdurch gelingt es die Temperaturbereiche von Wärmespeichern so einzurichten, dass eine zugeordnete Wärmepumpe jeweils mit optimaler Leistungszahl betrieben werden kann, wodurch der Energiebedarf für den Betrieb der Wärmepumpe minimiert wird.

In weiterer Ausgestaltung des erfindungsgemässen Verfahrens ist ebenfalls noch vorgesehen, dass als Wärmespeicher für die niedrigere Temperatur die Bausubstanz von nicht zu beheizenden Räumen von Gebäuden und dem angrenzenden Erdreich und als Wärmespeicher für die höhere Temperatur die Bausubstanz von zu beheizenden Räumen verwendet wird. Hierdurch werden zusätzliche Wärmespeicher entbehrlich und es kann je nach Wärmesituation Wärmemenge von dem einen Speicher in den anderen Speicher überführt werden, so dass es gelingt die Temperaturdifferenz zwischen beiden Speichern weitgehend auszugleichen, wodurch wiederum der Energiebedarf für die Wärmepumpe optimiert werden kann.

Nach einer anderen, weiteren Ausgestaltung des erfindungsgemässen Verfahrens wiederum ist vorgeschlagen, dass die Temperatur des einen Wärmespeichers durch einen Luftkreislauf und die des anderen Wärmespeichers durch einen Wasserkreislauf geregelt wird. Vorzugsweise wird hierbei der Luftkreislauf bei dem Wärmespeicher mit der niedrigeren Temperatur eingesetzt und der Wasserkreislauf bei dem Wärmespeicher mit der höheren Temperatur. Hierdurch können die baulichen Massnahmen minimiert werden und ausserdem wird hierdurch ein einfacher Wärmetransport durch die Wärmepumpe ermöglicht.

Nach dem erfindungsgemässen Verfahren ist weiterhin vorgeschlagen, dass durch bedarfsweise Zuführung von Fremdwärme über einen Luft-Wasser-Wärmetauscher die Temperatur der Wärmespeicher auf geeignetem Niveau gehalten wird. Erstrebenswert wäre an sich ein vollkommen geschlossener Wärmekreislauf des Hauses, der jedoch in der Natur nicht erreicht werden kann. Die Zufuhr von Fremdwärme ersetzt den jeweils auftretenden Verlust. Hierbei ist jedoch besonders vorteilhaft, dass aufgrund der vorgesehenen konstruktiven Massnahmen des Gebäudes jede beliebige Fremdwärme, beispielsweise Körperwärme der im Gebäude anwesenden Menschen, vollkommen ausgeschöpft werden kann. Ebenso kann beispielsweise von aussen eindringende Warmluft ausgenutzt werden, oder es ist möglich durch eine entsprechende Versorgungsleitung selbst sogen. kalte Fernwärme, also Wärmeträger mit einer Temperatur von ca. 25 °C noch wirtschaftlich zu nutzen. Insgesamt gelingt es mit dem erfindungsgemässen Verfahren und der erfindungsgemässen Anordnung auch Wärmemengen relativ niedriger Temperatur wirtschaftlich auszunutzen und gleichzeitig die erforderliche Wärmepumpe in ihrem optimalen Betriebsbereich einzusetzen.

Nach dem erfindungsgemässen Verfahren wird weiterhin vorgeschlagen, dass im Sommer der Luftkreislauf durch den Verdampfer mindestens einer Wärmepumpe kühlbar ist zur Regelung der Temperatur der Wärmespeicher (A) und (B). Es gelingt somit nach dem erfindungsgemässen Verfahren und unter Anwendung der entsprechenden Einrichtung, die Temperatur jeweils gewünschter Speicher in beliebiger Richtung zu beeinflussen.

Weiterhin ist nach dem erfindungsgemässen Verfahren noch vorgeschlagen, dass die Raumlufttemperatur der beheizten Räume durch Thermostate ausserhalb dieser Räume regelbar ist. Dies ist eine besonders günstige Möglichkeit der Regelung.

Es ist schliesslich nach einer Ausgestaltung des erfindungsgemässen Verfahrens vorgeschlagen, dass der Luftkreislauf des Wärmespeichers mit der niedrigeren Temperatur bedarfsweise über Luft-Sonnenkollektoren geführt werden kann. Insgesamt gelingt es, den Verlust des Wärmekreislaufs eines Gebäudes zu minimieren und den dennoch auftretenden Verlust durch nahezu beliebige Fremdwärmequellen, zu denen selbst die im Gebäude anwesenden Personen gerechnet werden können, zu ersetzen und durch den Einsatz von unabhängig voneinander regelbaren Wärmespeichern, die von dem Gebäude selbst gebildet werden, einen Wärmekreislauf mit geringer Temperaturdifferenz im Gebäude aufrecht zu erhalten, wodurch die den Wärmekreislauf treibende Wärmepumpe in ihrem optimalen Arbeitsbereich betrieben werden kann und daher nur einen geringen Eigenleistungsbedarf hat.

Ein Gebäude zur Durchführung des erfindungsgemässen Verfahrens mit Luftführungskanälen die in einen Sammelkanal münden und einer mit den Luftführungskanälen verbundenen Wärmepumpe ist dadurch gekennzeichnet, dass im Sammelkanal eine Strömungsmaschine zur Erzeugung der notwendigen Luftströmung angeordnet ist, und dass die Strömungsmaschine zur Wärmepumpe hinsichtlich des Luftkreislaufs parallel geschaltet ist, wobei entwärmte Luft über eine Zusatzleitung auch an die Aussenluft abgebbar ist. Hierdurch wird einerseits das Gebäude von einem geschlossenen Luftkreislauf umströmt, wobei die Wärmepumpe gegebenenfalls einen zweiten offenen Kreislauf durch ihre Parallelschaltung hinzufügen kann, der dadurch entsteht, dass ein Teil oder auch die gesamte von der Wärmepumpe entwärmte Luft nach aussen abgegeben wird, wodurch im Gebäude selbst ein Luftmangel entsteht. Der hierdurch erzeugte Unterdruck sorgt für ein Ansaugen von Frischluft aus der Aussenluft über die natürlichen Undichtigkeiten oder über hierfür angelegte Vorrichtungen des Gebäudes.

Nach einer Ausgestaltung der Erfindung ist vorgesehen, dass die Luftführungskanäle eine zusätzliche Einrichtung zur Veränderung des Wärmeinhaltes des Luftstromes aufweisen oder mit einer solchen verbindbar oder verbunden sind. Hierdurch wird erreicht, dass die Wärmepumpe immer mit optimaler Leistungszahl arbeiten kann.

Nach einer weiteren Ausgestaltung der Erfindung ist vorgesehen, dass die zusätzliche Einrichtung zur Veränderung des Wärmeinhaltes des Luftstromes ein fremdbetriebener Wärmetauscher ist. Dies kann beispielsweise eine Nachtspeicherheizung oder überhaupt eine Elektroheizung sein, deren Leistung stufenlos oder stufenweise regelbar ist und damit dem jeweiligen Bedarf der Wärmepumpe angepasst werden kann.

Weiterhin ist nach der Erfindung noch vorgeschlagen, dass die von der Wärmepumpe nach draussen abgegebene Luft durch Undichtigkeiten auf dem Speicher, in den Wohnungen und im Keller bzw. durch Fensterlüftung wieder ersetzt wird und über Lüftungsgitter in den Schacht und zur Wärmepumpe gelangt.

Weiterhin ist nach der Erfindung noch eine Art der Deckenheizung für die Wärmeverteilung vorgeschlagen, bei der Kupferrohrschlangen an den Decken befestigt und die Zwischenräume zwischen den Kupferrohren durch ankleben von Hartschaumplatten zum grössten Teil aufgefüllt werden. Der Bereich von ca. 5 cm, wo die Kupferrohre liegen, wird mit Gips aufgefüllt, wobei zur Verbesserung der Wärmeverteilung dann die ganze Decke mit Metallfolie beklebt wird.

Hinsichtlich der Gebäudegestaltung wird nach der Erfindung noch vorgeschlagen, dass die Hohlisolierung mit Hartschaumplatten nach Nut- und Feder-Art aus normalen Hartschaumplatten mit Abstandsstücken aus Hartschaum in einer Vorrichtung zusammengesetzt wird, wobei die versetzt angeordneten Hartschaumplatten durch Kunststoffnägel mit Widerhaken und Klebstoff zusammengehalten werden.

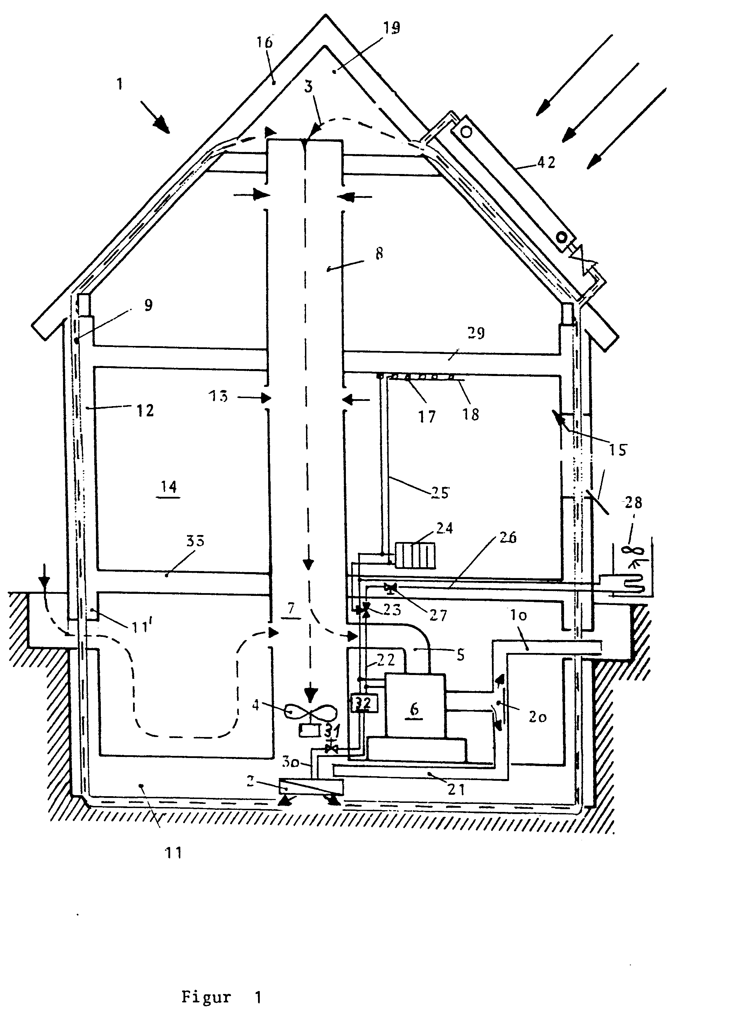

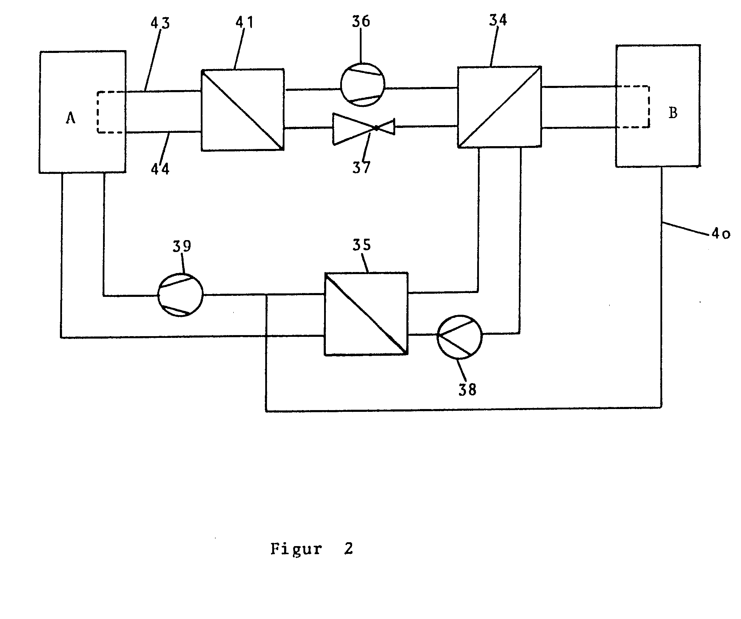

Die Erfindung soll nun anhand der beigefügten Zeichnungen, die in Figur 1 einen Schnitt durch ein geeignetes Wohnhaus und in Figur 2 eine Prinzipanordnung von Speichermassen und Wärmepumpe zeigen, näher erläutert werden.

Das Gebäude 1 ist abgedeckt durch ein Dach 16, welches auf Aussenwänden 12 ruht. Die Aussenwände 12 sind in üblicher Weise abgestützt auf Kellerwände 11', die ihrerseits mit dem Fundament 11 verbunden sind.

Das Fundament 11, die Kellerwände 11' und die darauf aufbauenden Aussenwände 12 und soweit erforderlich ebenfalls das Dach 16, weisen in Richtung ihrer Erstreckung längsverlaufende innere Lüftungskanäle 9 auf.

Das Gebäude 1 weist im Ausführungsbeispiel weiterhin einen als Zentralschacht ausgebildeten Luftkanal 8 auf, der beispielsweise bei Altgebäuden von einem nicht benutzten Schornsteinzug gebildet sein kann. Dieser als Zentralschacht ausgebildete Lüftungskanal 8 ist an seinem unteren Ende direkt mit den Luftführungskanälen 9 verbunden und verbindet sich an seinem oberen Ende über den Speicher 19 mit den Luftführungskanälen 9. Am Boden des Luftführungskanals 8 ist eine Strömungsmaschine 4, beispielsweise als elektromotorgetriebener Ventilator ausgebildet, angeordnet. Diese Strömungsmaschine 4 sorgt während ihrer Betriebszeit für einen umlaufenden Luftstrom 3, der durch den als Zentralschacht ausgebildeten Luftführungskanal 8 und durch die Luftführungskanäle 9 einen geschlossenen Kreislauf bildet, wodurch mindestens Teile der Aussenwände des Gebäudes und damit auch der Räume von Luft umströmt werden.

In einem Kellerraum eines Gebäudes ist eine Wärmepumpe 6 üblicher Bauart installiert, die über eine Einlassleitung 5 mit dem Luftführungskanal 8 verbunden ist und somit dem Luftstrom 3 Luft entnehmen kann. Die von der Wärmepumpe 6 entwärmte Luft kann über die Ausgangsleitung 21 in die Luftführungskanäle 9 und damit in den Luftstrom 3 zurückgepumpt werden. Es ist aber auch möglich, diese von der Wärmepumpe 6 entwärmte Luft über einen Mischer 20 zu verteilen oder auch vollständig umzuleiten, so dass ebenfalls oder ausschliesslich entwärmte Luft über die Zusatzleitung 10 an die Aussenluft abgegeben werden kann. Selbstverständlich kann hierbei der Mischer 20 automatisch betätigt sein, so dass eine Regelung nach vorgegebenem Regelschema erfolgen kann.

Die von der Wärmepumpe 6 erzeugte Wärme wird in üblicher Weise über Leitungen 22, Heizkörpern 24 oder zusätzlich oder ausschliesslich über Leitungen 25 Kupferrohrschlangen 17 zugeführt, die an der Decke 29 und/oder auf dem Fussboden 33 eines Gebäuderaumes 14 befestigt und unter einer Metallfolie 18 angeordnet sind. Es ist weiterhin möglich, die Leitung 22 mit einer abzweigenden Leitung 26 zu versehen, die beispielsweise auf der Aussenseite des Hauses in der freien Umgebungsluft in einen Kühler 28 mündet. Hierbei kann die Leitung 26 ein Absperrventil 27 aufweisen und der Einmündungspunkt der Leitung 26 in die Leitung 22 mit einem Mischer 23 ausgerüstet sein. Auch dieser Mischer 23 kann selbstverständlich automatisch nach einem vorgegebenen oder wählbaren Regelschema von einer Regeleinrichtung betätigt sein. Über den Heizkörper 24 und/oder die Kupferrohrschlangen 17 in Verbindung mit der Mantelfolie 18 kann die von der Wärmepumpe 6 erzeugte Wärme an die Gebäuderäume 14 abgegeben werden. Sie kann auch verteilt oder gänzlich umgeleitet werden durch entsprechende Einstellung des Mischers 23, so dass die von der Wärmepumpe 6 erzeugte Wärme ganz oder teilweise dem aussen angeordneten Kühler 28 zuführbar ist.

Innerhalb des als Zentralschacht ausgebildeten Luftführungskanals 8 kann ein Wärmetauscher 2 angebracht sein, der beispielsweise über die Regeleinrichtung 32, die einerseits mit der Wärmepumpe 6 und andererseits mit dem Wärmetauscher 2 in Verbindung steht, elektrisch beheizt und geregelt werden kann oder wahlweise andererseits über eine mit einem Absperrventil 31 ausgerüstete Leitung 30 beispielsweise über den Warmwasserkreislauf der Heizung beheizt werden kann.

Wird nun die Strömungsmaschine 4 in Betrieb genommen, so pumpt sie einen Luftstrom 3 in bereits beschriebener Weise um. Wird nun zusätzlich die Wärmepumpe 6 in Betrieb genommen, so entnimmt die Wärmepumpe 6 über die Einlassleitung 5 auf der Saugseite 7 der Strömungsmaschine 4 der durch den Luftführungskanal 8 strömenden Luft eine bestimmte Luftmenge und entwärmt diese zur Heizenergiegewinnung. Es kann nun über eine entsprechende Einstellung des Mischers 20 die entwärmte Luft über die Ausgangsleitung 21 wieder in den Luftstrom 3 zurückgeführt werden. Es ist aber ebenfalls möglich, mindestens einen Teil dieser entwärmten Luft über die Zusatzleitung 10 an die Umgebungsluft aussen ausserhalb des Hauses abzugeben. Mindestens hierdurch wird innerhalb des Luftführungskanals 8 ein genügend grosser Unterdruck erzeugt, so dass eine Luftströmung einsetzt, die als Abluft 13 aus den Gebäuderäumen 14 in den Luftführungskanal 8 hineinführt. Hierdurch wird erreicht, dass gleichzeitig mit der Abluft 13 auch Wärmeenergie aus den Gebäuderäumen 14 aufgenommen und beispielsweise an der Wärmepumpe 6 wieder zurückgewonnen und erneut dem Heizkreislauf zugeführt wird. Der Verlust an Luftmasse in den Gebäuderäumen 14 infolge der Abströmung der Abluft 13 wird durch natürliche Undichtigkeiten oder beispielsweise durch Fensterlüftung 15 durch Frischluft von aussen ersetzt. Damit ist verhindert, dass Wärmeenergie über einen in seiner Richtung unkontrollierten Luftaustausch nach aussen verloren geht. Auf diese Weise gelingt es, alle im Gebäude selbst, beispielsweise durch menschliche Körper erzeugte Wärme zurückzugewinnen. Ebenfalls wird alle von aussen zugeführte Wärme, beispielsweise durch Sonneneinstrahlung, über das Dach oder das Mauerwerk zurückgewonnen und verwertet. Ein nennenswerter und ungewollter Wärmeabfluss nach aussen ist ausgeschlossen. Ist jedoch der augenblickliche Wärmebedarf geringer als die Wärmeleistung der Wärmepumpe 6, dann ist es auch möglich die Wärmepumpe 6 abzuregeln oder auszuschalten. Es ist aber ebenso denkbar, die Heizleistung der Wärmepumpe auf den Wärmetauscher 2 zu schalten und die Beheizungseinrichtungen in den Gebäuderäumen 14 nicht zu bedienen. Es kann dann hierdurch der Luftstrom 3 auf der Druckseite der Strömungsmaschine 4 aufgeheizt und von dort in massereiche Teile des Gebäudes, also beispielsweise in das Fundament 11 und die Kellerwände 11' über die Luftführungskanäle 9, eingeleitet werden, wobei dann diese massereichen Gebäudeteile, die in ihrem Temperaturniveau wesentlich niedriger liegen, die ihnen solcherart über den Luftkreislauf 3 zugeführte Wärme aufnehmen und speichern. Da auch der umgebende Boden immer recht kühl bleibt, kann auch dieser Boden ggfls. als Speicherkapazität mit benutzt werden. Mit dem Boden steht ohne Kosten und zusätzlichen Bauaufwand ein zusätzlicher Wärmespeicher zur Verfügung. Die solcherart aufgeheizten massereichen Teile des Gebäudes und ggfls. auch der umgebende Boden können die Speicherwärme wieder an den über die Wärmepumpe 6 entsprechend kühl gehaltenen Luftstrom 3 abgeben, so dass die gespeicherte Wärme dann über die Wärmepumpe 6 wieder rückgewonnen werden kann.

Um die Leistungszahl der Wärmepumpe 6 bei besonders niedriger Aussentemperatur nicht in einen ungünstigen Bereich abfallen zu lassen, ist es auch in einem solchen Fall möglich, den Wärmetauscher 2 beispielsweise elektrisch fremd zu heizen und hierbei über die Regeleinrichtung 32 zu steuern. Hierdurch kann die Temperatur des Luftstromes 3 auf einen für den Betrieb der Wärmepumpe 6 idealen oder wenigstens angenähert idealen oder einem sonstwie gewünschten Wert gehalten werden.

Andererseits ist es auch möglich, wenn alle Wärmespeicherkapazitäten ausgenutzt sind, der Luftstrom 3 aber kühl gehalten werden soll, diesen Luftstrom 3 über die Wärmepumpe 6 zu erwärmen und die Leistung der Wärmepumpe 6 über einen Aussenkühler 28 abzuführen. Darüber hinaus kann es auch vorteilhaft sein, die aus der Wärmepumpe 6 austretende entwärmte Luft wieder in den Luftstrom 3 zurückzuführen, d.h. also saugseitig hinter der Strömungsmaschine 4 in den Luftführungskanal 8 einzuspeisen.

Allgemein wird also ein Luftstrom 3 durch eine Strömungsmaschine 4 in Bewegung gehalten und mindestens teilweise über eine parallel installierte Wärmepumpe 6 bei Bedarf in Teilmassen entwärmt, wobei die hierdurch zurückgewonnene Wärme beispielsweise zu Heizzwecken verwendet wird. Die Wärmepumpe ist hierbei eine Luft-Wasser-Wärmepumpe. Parallel zur Wärmepumpe kann eine zusätzliche Heizeinrichtung, beispielsweise in Altbauten eine fossilgefeuerte Heizungsanlage, betrieben werden. Dies hat den Vorteil, dass in Altbauten das vorhandene Heizungssystem bestehenbleiben kann und es kann Lüftungswärme aus den Wohnungen, Abstrahlungsverluste des Wärmeerzeugers und der Wärmeverteilung, Sonnenenergie vom Speicher und Erdwärme aus dem Keller zurückgewonnen werden. Hierbei sorgt das Absaugen der Abluft aus den Gebäuderäumen für eine grosse Luftverbesserung der Luft in diesen Gebäuderäumen und es wird durch eine solche Heizungsanlage insgesamt Energie eingespart und die Umweltbelastung reduziert.

Anstelle der parallel betriebenen fossilgefeuerten Heizungsanlage kann natürlich auch eine andere Heizungsanlage, wie z.B. eine elektrische Nachtspeicherheizung, verwendet werden, die den Vorteil einer leichteren und energiesparenden Regelung mit sich bringt. Bei einer weit verbreiteten Verwendung der erfindungsgemässen Heizungsmethode unter Einsatz einer Nachtspeicherheizung wäre es möglich, die Heizleistung der Nachtspeicherheizung drastisch zu reduzieren, so dass es weiterhin möglich wird, mit den vorhandenen Energiequellen bedeutend mehr Verbraucher mit Nachtstrom zu versorgen.

Ebenso ist es möglich über einen Wärmetauscher die Brauchwasserversorgung mit der Nachtspeicherheizung zu koppeln.

Es ist somit zum Ausgleich von Wärmebedarfsschwankungen im Luftkreislauf ein Wärmetauscher vorgesehen, der mindestens auch von Heizungswasser durchflossen werden kann, wenn z.B. durch Sonneneinstrahlung der Heizwärmebedarf der Verbraucher geringer ist. Dies hat die Vorteile, dass einerseits im Kellerfussboden und in den Kellerwänden, also in massereichen Teilen des Gebäudes, Wärme gespeichert werden kann, die in Zeiten höheren Heizwärmebedarfs wieder vom Heizungssystem genutzt werden kann und dass andererseits die Wärmepumpe immer bei optimaler Leistunszahl betrieben werden kann.

Zur Deckung der höchsten Wärmebedarfsspitzen bei sehr tiefen Aussentemperaturen, wird dann die Parallelheizung beispielsweise im Wasserkreislauf mit einer Leistung in der Grössenordnung der elektrischen Wärmepumpenleistung vorgesehen und betrieben. Es kann hierdurch beispielsweise wie sich gezeigt hat, mit einer Gesamtleistung von 6 kW der Wärmebedarf eines 5-Familienhauses mit ca. 320 qm Wohnfläche gedeckt werden. Eine solche Parallelheizung kann z.B. dadurch verwirklicht werden, dass der Wasserkreislauf des Heizungssystems über einen Wärmetauscher mit der Brauchwasserbereitung verknüpft wird. Hierdurch kann die Wärmepumpe auch bei sehr tiefen Aussentemperaturen bei optimaler Leistungszahl – wie bereits beschrieben – betrieben werden, weil die Leistung der Parallelheizung zusätzlich als Wärme zur Verdampfung des Kältemittels der Wärmepumpe zurückgewonnen werden kann. Hierbei wird das Zuschalten der Parallelheizung vorzugsweise über die Temperatur des Luftkreislaufs gesteuert, so dass die Parallelheizung erst nach Verbrauch der Speicherwärme in Betrieb geht. Hierbei kann wegen der grossen Speichermassen sowohl im Luftkreislauf (Kellerboden, Kellerwände) als auch im Wasserkreislauf (Fussboden- und Deckenheizung) eine elektrische Parallelheizung vorteilhafterweise mit Nachtstrom betrieben werden. Zur Senkung der Investitionskosten kann diese Parallelheizung gleich in den Heizungsvorlauf der Wärmepumpe eingebaut werden. Auch wird schon durch die Erhöhung der Rücklauftemperatur des Heizungswassers vor Einspeisung der durch die Parallelheizung erzeugten Wärme die von der Wärmepumpe gelieferte Wärme auf ein höheres Temperaturniveau gebracht. Was also bei einer herkömmlichen Wärmepumpe nur durch höhere elektrische Leistung des Kompressors möglich ist, wird nach der Erfindung durch ein nicht bewegtes Bauteil, nämlich durch einen Wärmetauscher, bewirkt. Hierdurch ist es möglich eine Wärmepumpe mit halb so grosser elektrischer Leistung wie bisher üblich zu verwenden, deren Betriebszyklen aber bedeutend länger sind. Hierdurch werden Investitionskosten eingespart und die Lebensdauer der Wärmepumpe verlängert.

Die von der Wärmepumpe aus dem Luftkreislauf abgesaugte Luft wird nach Abkühlung im Verdampfer teilweise nach draussen gegeben. Dadurch werden noch höhere Temperaturen (ca. 15 °C im Luftkreislauf) erreicht, weil die neu zuströmende Aussenluft in den Wohnungen auf über 20 °C und in den Kellerräumen auf ca. 12 °C erwärmt wird, bevor sie in den Verdampfer gelangt. Auf diese Weise wird nicht nur die Abwärme aus den Wohnungen, wie bereits beschrieben, optimal genutzt, sondern auch die im Keller und im benachbarten Erdreich gespeicherte Wärme. Ein weiterer Wärmegewinn kommt dadurch zustande, dass der Luftstrom 3 des Luftkreislaufes auch durch die Abwasser- und Brauchwasserschächte des Gebäudes geführt werden kann, so dass die dort aufnehmbare Wärme ebenfalls rückgewonnen wird. Wenn der Luftstrom 3 durch das Erdreich (z. B. in Drainagerohren) geführt wird, nimmt er die dort vorhandene Feuchtigkeit auf.

Ein Vorzug der Erfindung liegt in ihrer Anwendbarkeit auch bei bestehenden Gebäuden. Hierzu werden Hohlräume im Kellerfussboden und an der Innenseite der Aussenwände des Gebäudes (z. B. Hohlisolierung mit Hartschaumplatten nach Nut- und Feder-Art zusammengesetzt) geschaffen, durch welche die Luft zum Verdampfen des Kältemittels auf den Speicher gelangt. Auf dem Weg durch die Hohlräume nimmt die Luft Transmissionswärme auf. Die umgewälzte Luft wird im als Zentralschacht ausgebildeten Luftführungskanal 8, durch den die Luft wieder in den Keller und zur Wärmepumpe gelangt, mit Abwärme in der bereits beschriebenen Weise auf ein höheres Temperaturniveau gebracht. Nach Abkühlung im Verdampfer wird die über die Wärmepumpe abgesaugte Luft teilweise nach draussen gegeben. Bei dieser Art der Innenisolierung ist ausserdem die Gefahr der Schwitzwasserbildung nicht gegeben, weil die umgewälzte Luft evtl. auftretende Feuchtigkeit aufnimmt und im Verdampfer wieder abgibt. Ein zusätzlicher Vorteil liegt also in der Trockenheit des Gebäudes.

Einer der Kerngedanken der Erfindung liegt darin, die Temperaturdifferenz zwischen den verschiedenen energieaustauschenden Energiespeichern möglichst gering zu halten um einen nicht gewollten Energieaustausch mit der Umgebung klein zu halten. Hierbei sollen die Energiespeicher des Heizungssystems eine möglichst grosse Wärmekapazität besitzen, so dass mindestens angenähert stationäre Energieübertragungsverhältnisse erreicht werden können.

Die beiden wichtigsten Energiespeicher des Heizungssystems sind, wie beschrieben, die Fussboden- und Deckenheizung in den Wohnungen und der Luftkreislauf der das Gebäude einhüllt. Bei beiden Energiespeichern wird die hohe Kapazität durch die grosse Masse der verwendeten Baukomponenten erreicht. So wird die Wärme des Verteilungssystems in den Fussboden und Decken der Wohnungen gespeichert. Der Luftkreislauf nutzt die Masse der tragenden Aussenwände, des Kellers mit benachbartem Erdreich und des Speichers. Hierbei verändert sich die Temperatur im Luftkreislauf maximal um 5 K wenn die Aussentemperatur Unterschiede von mehr als 20 K aufweist. Zwischen dem Luftkreislauf und dem Wärmeverteilungssystem wird mit Hilfe des Kältemittelkreislaufs der Wärmepumpe die notwendige Energie übertragen. Dabei wird wegen der grossen Masse der beiden Energiespeicher und der grossen Fläche des Wärmeverteilungssystems die Temperaturdifferenz zwischen Kondensation und Verdampfung des Kältemittels nicht grösser als 30 K und dies bedeutet, dass die Wärmepumpe eine sehr günstige Leistungszahl hat. Wärme aus dem Wärmeverteilungssystem wird nur über nicht mit Luft umströmte Bauteile als Transmissionsverluste direkt an die Aussenluft abgegeben. Alle übrige Wärme aus den Innenräumen 14 wird vom Luftkreislauf aufgenommen und zum Verdampfen des Kältemittels genutzt oder als Transmissionswärme an die Kellerluft abgegeben. Bei Temperaturen unter dem Gefrierpunkt nehmen die Transmissionsverluste aus dem Luftkreislauf, d. h. aus dem beheizten Gebäude, somit nicht proportional der Temperaturdifferenz zwischen Raumtemperatur und Aussentemperatur zu.

In aller Regel sinkt die Temperatur des Luftkreislaufs nicht unter 7 °C, so dass ein erfindungsgemässes Heizungssystem nur für einen Temperaturunterschied zwischen Wohnraum und Luftkreislauf von 15 K in Bezug auf die Wandtransmissionsverluste ausgelegt werden muss. Bei den Lüftungsverlusten genügt auch ein Temperaturunterschied von 15 K, weil die von der Wärmepumpe nach draussen abgegebene Luft eine Temperatur von ca. 2 °C hat.

Wegen des relativ gleichmässigen Potentialunterschieds der Energiespeicher, kann das erfindungsgemässe Heizungssystem so ausgelegt werden, dass die Wärmepumpe bei Aussentemperaturen unter 10 °C ständig durchläuft. Eine beispielsweise elektrische Parallelheizung ermöglicht dann, z. B. bei Temperaturen unterhalb 5 °C, eine stufenweise Erhöhung der Heizleistung. Das Heizungssystem wird dann wochenlang mit der gleichen Leistung betrieben und wird damit zum typischen Grundlastverbraucher. Hierbei hat dann die Parallelheizung den Vorteil, dass die Wärmepumpe auch bei sehr tiefen Aussentemperaturen bei optimaler Leistungszahl betrieben werden kann, weil, wie bereits beschrieben, die Leistung der Parallelheizung zusätzlich als Wärme zur Verdampfung des Kältemittels der Wärmepumpe zurückgewonnen werden kann.

In Figur 2 ist noch einmal schematisch die Art des Wärmeaustauschs dargestellt. Mit den Buchstaben A und B sind Wärmespeicher bezeichnet, wobei mit A der kühlere Wärmespeicher und mit B der wärmere Wärmespeicher bezeichnet ist. Als Speicher A kommen beispielsweise ungeheizte Kellerräume oder ungeheizte Dachräume infrage. Der Speicher B kann beispielsweise von den beheizten Wohräumen gebildet werden. Der Speicher A steht über Leitungen 43 und 44 mit einem Verdampfer 41 in Verbindung, wodurch die aus dem Speicher A über die Leitungen 43 und 44 in einem Kreislauf durch den Verdampfer 41 hindurchgeführte Luft dort ihre Wärme abgibt, der Verdampfer 41 ist also ein Wärmetauscher. In üblicher Weise wird aus dem Wärmetauscher 41 das verdampfte Medium entnommen und vom Kompressor 36 komprimiert und dabei wie bekannt erhitzt und im als Kondensator 34 arbeitenden Wärmetauscher wieder abgekühlt und kondensiert und über das Expansionsventil 37 wieder dem Wärmetauscher 41 zugeführt. Die am Wärmetauscher 34 abgegebene Wärme wird dem Speicher B zugeführt, was nichts anderes bedeutet, als dass die im Gebäude zu beheizenden Räume beheizt werden. Die im Speicher B durch die Beheizung befindliche Warmluft kann über die Leitung 40, getrieben von der Strömungsmaschine 39, dem kühleren Speicher A zugeführt werden, wodurch dessen Temperaturniveau gehoben wird und ein ungünstiges Ansteigen der Temperaturdifferenz zwischen dem Speicher B und dem Speicher A mit nachteiligen Auswirkungen auf den Betrieb der Wärmepumpe vermieden werden. Natürlich ist es möglich, wenn auch nicht näher eingezeichnet, die Leitung 40 beispielsweise thermostatgeregelt zu- und abschaltbar auszubilden. Über die genannte Leitung 40 kann gleichzeitig vorteilhafterweise eindringende Fremdwärme, beispielsweise Sonneneinstrahlung durch Fenster oder Körperwärme von vielen anwesenden Personen, in den Speicher A rückgeführt werden, so dass auch hierdurch ein Ansteigen der Temperatur im Speicher B einerseits absolut und andererseits in Relation zum Speicher A verhindert werden kann.

Es ist weiter vorgesehen die Wärmezufuhr zum Speicher B über den Wärmetauscher 34 auch vollständig unterbrechbar zu gestalten. Hierzu ist ein weiterer Wärmetauscher 35 vorgesehen der beispielsweise mit dem Wasserkreislauf des Wärmetauschers 34 mittels einer Pumpe 38 und geeigneter nicht näher bezeichneter Leitungen einen Wasserkreislauf zwischen den beiden Wärmetauschern 34 und 35 herstellt. Der Wärmetauscher 35 gibt dann die empfangene Wärme auf der Luftseite wieder ab, wobei der Luftkreislauf von der bereits beschriebenen Strömungsmaschine 39 angetrieben wird. Hierdurch wird die an den Wärmetauscher 35 abgegebene Wärme wieder zurückgeführt in den Speicher A.

In die Speicher A und B kann selbstverständlich auch auf andere Art und Weise Fremdwärme hineintransportiert werden. Wegen der Speicherkapazität der genannten Speicher A und B kann ein solcher Fremdwärmetransport zu einem Zeitpunkt geschehen, der für die Art der verwendeten Fremdwärme am günstigsten ist. Soll beispielsweise Fremdwärme auf elektrischem Wege eingebracht werden, so ist es möglich hierzu den Bereich der Kleinstlastzeiten zu verwenden. Dies ist nicht nur günstig für eine möglichst gleichmässige Auslastung der Kraftwerke, sondern sorgt gleichzeitig dafür, dass wegen eines günstigen Temperaturverhältnisses zwischen den Speichern A und B die ja auch tagsüber laufende Wärmepumpe geringstmögliche elektrische Energie aufnimmt, wodurch somit tagsüber für die Kraftwerke Energiespitzen abgebaut werden können.

Natürlich ist es neben elektrisch zugeführter Fremdenergie möglich auch beliebige andere Fremdenergiequellen zu nutzen, wie beispielsweise Kühlwasser aus irgendwelchen Kraftanlagen selbst dann, wenn dieses Kühlwasser nur eine Temperatur von 20–25 °C oder gar noch weniger aufweist.

Bei Einzelanwendung der Erfindung gelingt es somit einen optimalen Wärmekreislauf in einem Gebäude zu erreichen. Bei Massenanwendung würde es gleichzeitig gelingen den Gesamtenergiebedarf zu senken und die bei den Kraftwerken auftretenden starken Lastschwankungen zu glätten.

Es gelingt somit bei niedrigen Investitionskosten sowohl bei Neubauten als auch bei Altbauten, besonders energiesparend zu heizen mit Komponenten des Heizungssystems die auch den Einsatz von Wärme geringer Temperatur möglich macht. Das gesamte System ermöglicht jedoch nicht nur die Heizung, sondern ermöglicht gleichzeitig eine Klimatisierung und bewirkt verbesserte Luft der Innenräume. Der notwendige Wärmekreislauf wird mit nur geringer Temperaturdifferenz betrieben, wodurch der Eigenleistungsbedarf der den Wärmekreislauf antreibenden Wärmepumpe minimiert wird.

Liste der verwendeten Bezugszeichen

1 Gebäude
2 Wärmetauscher
3 Luftstrom
4 Strömungsmaschine
5 Einlassleitung Wärmepumpe
6 Wärmepumpe
7 Saugseite
8 Luftführungskanäle
9 Luftführungskanäle
10 Zusatzleitung
11 massereiche Teile des Gebäudes (Fundament)
11' Kellerwände
12 Aussenwände
13 Abluft
14 Gebäuderäume
15 Fensterlüftung
16 Dach
17 Kupferrohrschlangen
18 Metallfolie
19 Speicher
20 Mischer
21 Ausgangsleitung
22 Leitung
23 Mischer
24 Heizkörper
25 Leitung
26 Leitung
27 Absperrventil
28 Kühler
29 Decke
30 Leitung
31 Ventil
32 Regeleinrichtung
33 Fussboden
34 Wärmetauscher (Kondensator)
35 Wärmetauscher
36 Kompressor
37 Expansionsventil
38 Pumpe

39  Strömungsmaschine
40  Leitung
41  Wärmetauscher (Verdampfer)
42  Luft-Sonnenkollektor
43  Leitung
44  Leitung

**Patentansprüche**

1. Verfahren zur Energieeinsparung bei der Regelung der Lufttemperatur in Gebäuden, wobei mindestens Teile der Aussenwände (12) über entsprechende Luftführungskanäle (9) von Luft umströmt werden, wobei die Luft von einer Strömungsmaschine bewegt und in einen Kreislauf zur Strömungsmaschine rückgeführt und einer Wärmepumpe zugeführt wird, dadurch gekennzeichnet, dass die Strömungsmaschine (4) unabhängig ist und die Luft saugseitig (7) von Abluft (13) aus den Gebäuderäumen (14) und Gebäudekanälen ergänzt wird und mindestens in einer für die angestrebte Regelung notwendigen Menge der Wärmepumpe (6) zugeführt wird wobei die entwärmte Luft wahlweise insgesamt oder in Teilbeträgen in den Kreislauf zurückgeführt und die nicht zurückgeführte Luft nach aussen abgegeben wird, wobei die nach aussen abgegebene Luft infolge des in den Räumen (14) entstehenden leichten Unterdrucks über natürliche Undichtigkeiten des Gebäudes (1) oder/und Fensterlüftung (15) ersetzt wird.

2. Verfahren nach Anspruch 1, dadurch gekennzeichnet, dass die im Luftkreislauf umgepumpte Luft durch massereiche Teile (11) des Gebäudes (1) geführt wird.

3. Verfahren nach einem der Ansprüche 1 und 2, dadurch gekennzeichnet, dass die der Wärmepumpe (6) zugeführte Luft, falls erforderlich durch Zufuhr von Fremdwärme auf ein für einen optimalen Betrieb der Wärmepumpe (6) günstiges Temperaturniveau gebracht oder dort gehalten wird.

4. Verfahren nach einem der Ansprüche 1 und 2, dadurch gekennzeichnet, dass der Luftstrom (3) durch Zufuhr von Fremdwärme über den Wärmetauscher (2) auf ein günstiges Temperaturniveau gebracht und/oder dort gehalten wird, um mit der zugeführten Wärme den Wärmebedarf des Gebäudes zu decken.

5. Verfahren nach einem der Ansprüche 1 bis 4 mit einem Wärmetauscher im Luftkreislauf am Fuss des Zentralschachtes, dadurch gekennzeichnet, dass der Wärmetauscher bei geringem Heizwärmebedarf der Verbraucher von Heizungswasser durchflossen wird und Kellerfussboden und Kellerwände mit Hilfe der umgewälzten Luft aufgeheizt werden, wobei die Aufheizung über einen Raumthermostaten im Luftkreislauf und über Thermostate in den Wohnungen geregelt wird.

6. Verfahren nach einem der Ansprüche 1 bis 5, dadurch gekennzeichnet, dass bei der Anordnung einer Parallelheizung im Vorlauf des Wärmekreislaufs die Leistung der Parallelheizung die gleiche Grössenordnung hat wie die elektrische Leistung der Wärmepumpe, wobei eine solche Parallelheizung in die Wärmepumpe integriert sein kann.

7. Verfahren nach einem der Ansprüche 1 bis 4, dadurch gekennzeichnet, dass die Wärmepumpe im Keller Luft über den Luftführungskanal (8) aus den Wohnräumen (14) und dem Keller ansaugt und nach Abkühlung der Luft auf ca. 2°C nach draussen bläst.

8. Verfahren nach einem der Ansprüche 1 bis 7, dadurch gekennzeichnet, dass die Temperatur von mindestens zwei Niedertemperatur-Wärmespeichern (A, B) unabhängig voneinander geregelt wird.

9. Verfahren nach Anspruch 8, dadurch gekennzeichnet, dass als Wärmespeicher (A) für die niedrigere Temperatur die Bausubstanz von nicht zu beheizenden Räumen von Gebäuden und dem angrenzenden Erdreich und als Wärmespeicher (B) für die höhere Temperatur die Bausubstanz von zu beheizenden Räumen verwendet wird.

10. Verfahren nach einem der Ansprüche 8 und 9, dadurch gekennzeichnet, dass die Temperatur des einen Wärmespeichers (A) durch einen Luftkreislauf und die des anderen Wärmespeichers (B) durch einen Wasserkreislauf geregelt wird.

11. Verfahren nach einem der Ansprüche 1 bis 10, dadurch gekennzeichnet, dass durch bedarfsweise Zuführung von Fremdwärme über einen Luft-Wasserwärmetauscher die Temperatur der Wärmespeicher (A, B) auf geeignetem Niveau gehalten wird.

12. Verfahren nach einem der Ansprüche 1 bis 11, dadurch gekennzeichnet, dass im Sommer der Luftkreislauf durch den Verdampfer mindestens einer Wärmepumpe kühlbar ist zur Regelung der Temperatur der Wärmespeicher (A) und (B).

13. Verfahren nach einem der Ansprüche 1 bis 12, dadurch gekennzeichnet, dass die Raumlufttemperatur der beheizten Räume durch Thermostate ausserhalb dieser Räume regelbar ist.

14. Verfahren nach einem der Ansprüche 1 bis 13, dadurch gekennzeichnet, dass der Luftkreislauf des Wärmespeichers (A) mit der niedrigeren Temperatur bedarfsweise über Luft-Sonnenkollektoren (42) geführt werden kann.

15. Gebäude zur Durchführung des Verfahrens nach den Ansprüchen 1 bis 14 mit Luftführungskanälen, die in einen Sammelkanal münden und einer mit den Luftführungskanälen verbundenen Wärmepumpe, dadurch gekennzeichnet, dass im Sammelkanal (8) eine Strömungsmaschine (4) zur Erzeugung der notwendigen Luftströmung angeordnet ist, und dass die Strömungsmaschine (4) zur Wärmepumpe (6) hinsichtlich des Luftkreislaufes parallel geschaltet ist, wobei entwärmte Luft über eine Zusatzleitung (10) auch an die Aussenluft abgebbar ist.

16. Gebäude nach Anspruch 15, dadurch gekennzeichnet, dass die Luftführungskanäle (8, 9) eine zusätzliche Einrichtung (2) zur Veränderung des Wärmeinhaltes des Luftstromes (3) aufweisen, oder mit einer solchen verbindbar oder verbunden sind.

17. Gebäude nach Anspruch 16, dadurch gekennzeichnet, dass die zusätzliche Einrichtung (2) zur Veränderung des Wärmeinhaltes des Luftstromes (3) ein fremdbetriebener Wärmetauscher ist.

18. Gebäude nach einem der Ansprüche 15 bis 17, dadurch gekennzeichnet, dass die von der Wärmepumpe nach draussen abgegebene Luft durch Undichtigkeiten auf dem Speicher, in den Wohnungen und im Keller bzw. durch Fensterlüftung wieder ersetzt wird und über Lüftungsgitter in den Schacht und zur Wärmepumpe gelangt.

19. Gebäude nach einem der Ansprüche 15 bis 18 gekennzeichnet durch die Verwendung einer Deckenheizung für die Wärmeverteilung, bei der Kupferrohrschlangen an den Decken befestigt und die Zwischenräume zwischen den Kupferrohren durch Ankleben von Hartschaumplatten zum grössten Teil aufgefüllt werden, wobei ein Bereich von ca. 5 cm, in dem die Kupferrohre liegen, mit Gips aufgefüllt und die Decke zur Verbesserung der Wärmeverteilung dann mit Metallfolie beklebt wird.

20. Gebäude nach einem der Ansprüche 15 bis 19, dadurch gekennzeichnet, dass die Hohlisolierung mit Hartschaumplatten nach Nut- und Feder-Art aus normalen Hartschaumplatten mit Abstandsstücken aus Hartschaum in einer Vorrichtung zusammengesetzt wird, wobei die versetzt angeordneten Hartschaumplatten durch Kunststoffnägel mit Widerhaken und Klebstoff zusammengehalten werden.

**Claims**

1. Method for saving energy while regulating the temperature of the air in buildings, whereby air flows round at least parts of the outer walls (12) through corresponding air ducts (19), whereby the air is moved by a circulating machine and is circulated towards a heat pump and back to the circulating machine, characterized in that the circulating machine (4) is independent and the air is supplemented on the intake side (7) by the air discharge (13) out of the building's rooms (14) and building's ducts and is directed to the heat pump (6) in in such quantities as are necessary for the desired regulation, whereby the air which has had the heat extracted is either directed back into the circulation in partial amounts or the air which is not recirculated is discharged outside, whereby the air discharged is replaced due to the reduced pressure arising in the rooms (14) via natural leakage paths of the building (1) or window ventilation (15).

2. Method according to claim 1, characterized in that the air pumped in the air circulation system is directed through the structured masses (11) of the building (1).

3. Method according to one of the claims 1 and 2, characterized in that the air directed to the heat pump (6) is heated via external heating to temperature favourable for the optimal functioning of the heat pump (6) or kept at this temperature when necessary.

4. Method according to one of the claims 1 and 2, characterized in that the air flow (3) is heated to or kept at a favourable temperature by the addition of external heat via the heat exchanger (2) in order to meet the heat requirements of the building with the additional heat.

5. Method according to one of the claims 1 to 4 with a heat exchanger in the air circulation system at the base of the central shaft, characterized in that heating water flows through the heat exchanger when the consumer requires a small amount of heat and the cellar floor and walls are heated with the help of the circulated air, whereby the heating up is controlled by a room thermostat in the air circulation system and by thermostats in the apartments.

6. Method according to one of the claims 1 to 5, characterized in that when a parallel heater is arranged in the forward flow of the water circulation the efficiency of the parallel heating has the same order of magnitude as the electrical efficiency of the heat pump, whereby such a parallel heating can be integrated in the heat pump.

7. Method according to one of the claims 1 to 4, characterized in that the heat pump in the cellar sucks air out of the living rooms (14) and the cellar via the air duct (8) and blows the air outside after it has cooled to approximately 2 °C.

8. Method according to one of the claims 1 to 7, characterized in that temperature ist regulated by at least two low-temperature heat stores (A, B) independently of each other.

9. Method according to claim 8, characterized in that the fundaments of unheated rooms of buildings and the surrounding earth are used as a heat store (A) for the low temperatures and as a heat store (B) for the higher temperatures the fundaments of heated rooms.

10. Method according to one of the claims 8 and 9, characterized in that the temperature of the one heat store (A) is regulated by an air circulation system and of the other heat store (B) by a water circulation system.

11. Method according to one of the claims 1 to 10, characterized in that the temperature of the heat stores (A, B) is kept at a suitable level by the addition of external heat when necessary.

12. Method according to one of the claims 1 to 11, characterized in that the air circulation system can be cooled by the evaporator of at least one heat pump to regulate the temperature of the heat stores (A) and (B).

13. Method according to one of the claims 1 to 12, characterized in that the air temperature of the heated rooms is controllable by thermostats outside of these rooms.

14. Method according to one of the claims 1 to 13, characterized in that the air circulation system of the heat store (A) with the lower temperature can be directed over air-solar collectors (42).

15. Building for carrying out the method according to the claims 1 to 14 with air ducts which mouth in a collecting duct and a heat pump connected with the air ducts, characterized in that a circulating machine (4) for producing the necessary air flow is arranged in the collecting duct (8) and in that the circulating machine (4) and heat pump (6) operate in parallel with reference to the air circulation system, whereby the air which has had the heat extracted can be released to the atmosphere over an additional conduit (10).

16. Building according to claim 15, characterized in that the air ducts (8, 9) have an additional device (2) for changing the heat content of the air flow (3) or they can be connected or are connectable to such a device.

17. Building according to claim 16, characterized in that the additional device (2) for changing the heat content of the air flow (3) is an externally operated heat exchanger.

18. Building according to one of the claims 15 to 17, characterized in that the air discharged outside by the heat pump is replaced via leakage paths in the attic, in the appartments and in the cellar respectively via window ventilation, and reaches the heat pump through ventilation grids in the shaft.

19. Building according to one of the claims 15 to 18, characterized in that a ceiling heating is used for distributing the heat, where copper pipe coils are fixed to the ceiling and the spaces inbetween are largely filled by glueing on hard foam panels, whereby an area of approximately 5 cm, in which the copper pipes lie, is filled up with plaster of Paris and the ceiling is covered with metal foil to improve the distribution of heat.

20. Building according to one of the claims 15 to 19, characterized in that the hollow insulation with hard foam panels is put together in an arrangement according to the groove and tongue technique with normal hard foam panels with separating pieces of hard foam, whereby the hard foam panels which are staggered are held together by plastic nails with interlocking hardware and adhesive.

**Revendications**

1. Procédé pour économiser de l'énergie lors de la régulation de la température de l'air dans des bâtiments dont les murs extérieurs (12) sont, au moins en partie, parcourus par de l'air circulant dans des canaux de conduction d'air appropriés (9), procédé selon lequel l'air est déplacé par une turbomachine pour être ramené à cette turbomachine dans un circuit et alimenter une pompe à chaleur, caractérisé en ce que la turbomachine (4) est autonome et l'air, du côté de l'aspiration (7), est complété par de l'air (13) sortant des pièces (14) du bâtiment et des canaux du bâtiment et est fourni à la pompe à chaleur (6), au moins en quantité nécessaire pour la régulation souhaitée, l'air déchargé de ses calories étant sélectivement recyclé, en totalité ou en quantités partielles, dans le circuit et l'air non-recyclé étant rejeté à l'extérieur, l'air rejeté à l'extérieur étant, par suite de la légère dépression qui se crée dans les pièces (14), renouvelé à travers les défauts d'étanchéité naturels du bâtiment et/ou les aérations des fenêtres (15).

2. Procédé selon la revendication 1, caractérisé en ce que l'air mis en circulation par la pompe dans le circuit d'air est dirigé à travers des parties massives (11) du bâtiment (1).

3. Procédé selon l'une des revendications 1 et 2, caractérisé en ce que l'air qui est fourni à la pompe à chaleur (6) est, en cas de besoin, amené ou maintenu, par un apport de calories extérieures, à un niveau de température favorable pour un fonctionnement optimal de la pompe à chaleur (6).

4. Procédé selon l'une des revendications 1 et 2, caractérisé en ce que le fluxe d'air (3) est amené et/ou est maintenu, par un apport de calories extérieures obtenu au moyen de l'échangeur de chaleur (2), à un niveau de température favorable pour couvrir les besoins thermiques du bâtiment, avec les calories fournies.

5. Procédé selon l'une des revendications 1 à 4, faisant appel à un échangeur de chaleur placé dans le circuit d'air au fond du puits central, caractérisé en ce que, dans le cas d'un faible besoin en calories de chauffage de la part de l'utilisateur, l'échangeur de chaleur est traversé par un écoulement d'eau de chauffage et le plancher ainsi que les murs du sous-sol sont chauffés au moyen de l'air en mouvement, la régulation du chauffage étant réalisée par l'intermédiaire d'un thermostat d'ambiance placé dans le circuit d'air et par l'intermédiaire des thermostats situés dans les appartements.

6. Procédé selon l'une des revendications 1 à 5, caractérisé en ce que, dans le cas de la présence d'un chauffage parallèle en tête du circuit d'eau, le rendement de ce chauffage parallèle est du même ordre de grandeur que le rendement électrique de la pompe à chaleur, ce chauffage parallèle pouvant alors être intégré dans la pompe à chaleur.

7. Procédé selon l'une des revendications 1 à 4, caractérisé en ce que la pompe à chaleur située dans le sous-sol, aspire l'air des pièces d'habitation (14) et du sous-sol par l'intermédiaire du canal du conducteur d'air (8) et, après avoir abaissé la température de l'air d'environ 2 °C, le rejette à l'extérieur.

8. Procédé selon l'une des revendications 1 à 7, caractérisé en ce que les températures d'au moins deux accumulateurs de chaleurs basse température (A, B) sont réglées indépendamment l'une de l'autre.

9. Procédé selon la revendication 8, caractérisé en ce que l'on utilise, comme accumulateur de chaleur (A) pour les plus basses températures, le matériau de construction des pièces de bâtiments, non destinées à être chauffées, et la masse de terre contiguë, et, comme accumulateur de chaleur (B) pour les températures les plus élevées, le matériau de construction des pièces à chauffer.

10. Procédé selon l'une des revendications 8 et 9, caractérisé en ce que la température de l'un des accumulateurs de chaleur (A) est réglée par un circuit d'air et celle de l'autre accumulateur de chaleur (B) est réglée par un circuit d'eau.

11. Procédé selon l'une des revendications 1 à 10, caractérisé en ce que la température des accumulateurs de chaleur (A, B) est en cas de besoin, maintenue au niveau approprié par un apport de calories extérieures réalisé au moyen d'un échangeur de chaleur air-eau.

12. Procédé selon l'une des revendications 1 à 11, caractérisé en ce que, en été, le circuit d'air peut être refroidi par l'évaporateur d'au moins une pompe à chaleur en vue du réglage de la température des accumulateurs de chaleur (A, B).

13. Procédé selon l'une des revendications 1 à 12, caractérisé en ce que la régulation de température de l'air ambiant dans les pièces chauffées peut être effectuée à l'aide de thermostats situés à l'extérieur de ces pièces.

14. Procédé selon l'une des revendications 1 à 13, caractérisé en ce que le circuit d'air de l'accumulateur de chaleur (A) pour les températures les plus basses, peut traverser en cas de besoin des collecteurs solaires à air (42).

15. Bâtiment pour la mise en œuvre du procédé selon les revendications 1 à 14, comportant des canaux de conduction d'air, qui débouchent dans un canal collecteur, et une pompe à chaleur raccordée aux canaux de conduction d'air, caractérisé en ce qu'une turbomachine (4) est disposée dans le canal collecteur (8) pour engendrer la circulation d'air nécessaire, et en ce que cette turbomachine (4) est montée en parallèle sur la pompe à chaleur (6) à l'égard du circuit d'air, l'air déchargé de ses calories pouvant être rejeté dans l'atmosphère à travers un conduit auxiliaire (10).

16. Bâtiment selon la revendication 15, caractérisé en ce que les canaux de conduction d'air (8, 9) renferment un dispositif auxiliaire (2) permettant de faire varier la quantité de calories du flux d'air (3), ou sont reliés ou peuvent être reliés à un tel dispositif auxiliaire.

17. Bâtiment selon la revendication 16, caractérisé en ce que le dispositif auxiliaire (2) permettant de faire varier la quantité de calories du flux d'air (3) est un échangeur de chaleur à fonctionnement séparé.

18. Bâtiment selon l'une des revendications 15 à 17, caractérisé en ce que l'air rejeté à l'extérieur par la pompe à chaleur est renouvelé à travers les défauts d'étanchéité sur l'accumulateur, dans les appartements et dans le sous-sol, et, le cas échéant, par les aérations des fenêtres, et parvient dans le puits et jsuqu'à la pompe à chaleur en passant à travers une grille d'aération.

19. Bâtiment selon l'une des revendications 15 à 18, caractérisé par l'utilisateur d'un chauffage de plafond pour la répartition de la chaleur, auquel cas des serpentins en tubes de cuivre sont fixés aux plafonds et les espaces formés entre les tubes de cuivre sont remplis, pour leur plus grande partie, de plaques de mousse rigide fixées par collage, une zone d'environ 5 cm, dans laquelle s'étendent les tubes de cuivre étant remplis de gypse et, le plafond étant alors revêtu, par collage, d'une feuille métallique pour améliorer la répartition de chaleur.

20. Bâtiment selon l'une des revendications 15 à 19, caractérisé en ce que l'isolation creuse en plaques de mousse rigide est réalisée, dans un dispositif, par un assemblage à rainures et languettes de plaques de mousse rigide ordinaires avec interposition de pièces d'écartement en mousse rigide, auquel cas les plaques de mousse rigide décallées les unes par rapport aux autres sont maintenues assemblées par des clous à crochet en matière plastique et par de la colle.

Figur 1

Figur 2